# FASCICULE DE BREVET EUROPEEN

(11) **EP 2 683 070 B1**
(45) Date de publication et mention de la délivrance du brevet: **07.12.2016**
(21) Numéro de dépôt: 13174020.1
(22) Date de dépôt: 27.06.2013
(51) Int. Cl.: H02M 3/335

(54) **Système de conversion de puissance modulaire à partir d'un pont asymétrique avec diode d'isolation primaire et des interrupteurs multiples**
Modulares Leistungsumrichtungssystem auf Basis einer asymetrischen Brücke mit primärseitiger Isolationsdiode und mehreren Schaltern
Modular power conversion system based on an asymmetrical bridge with primary isolation diode and multiple syitches.

(30) Priorité: 04.07.2012 FR 1256409
(43) Date de publication de la demande: 08.01.2014
(73) Titulaire: CENTRE NATIONAL D'ETUDES SPATIALES, 75001 Paris (FR)
(72) Inventeur: Schwander, Denis, 31860 LABARTHE SUR LEZE (FR); Marmouget, Marc, 65150 SAINT-LAURENT DE NESTE (FR)
(74) Mandataire: Lavoix

(56) Documents cités:
- DE-A1- 4 017 207
- SHIGUO LUO ET AL: "A high-frequency AC distributed power system with dual PWM buses", APEC 2003. 18TH. ANNUAL IEEE APPLIED POWER ELECTRONICS CONFERENCE AND EXPOSITION. MIAMI BEACH, FL, FEB. 9 - 13, 2003; [ANNUAL APPLIED POWER ELECTRONICS CONFERENCE], NEW YORK, NY : IEEE, US, vol. 1, 9 février 2003 (2003-02-09), pages 63-68, XP010631490, DOI: 10.1109/APEC.2003.1179177 ISBN: 978-0-7803-7768-4
- TAN F D ED - INSTITUTE OF ELECTRICAL AND ELECTRONICS ENGINEERS: "The forward converter: from the classic to the contemporary", APEC 2002. 17TH. ANNUAL IEEE APPLIED POWER ELECTRONICS CONFERENCE AND EXPOSITION. DALLAS, TX, MARCH 10 - 14, 2002; [ANNUAL APPLIED POWER ELECTRONICS CONFERENCE], NEW YORK, NY : IEEE, US, vol. 2, 10 mars 2002 (2002-03-10), pages 857-863, XP010583018, DOI: 10.1109/APEC.2002.989344 ISBN: 978-0-7803-7404-1
- SALAZAR L ET AL: "A high frequency forward DC/DC converter topology with transformer flux balancing capability", 19881002; 19881002 - 19881007, 2 octobre 1988 (1988-10-02), pages 785-792, XP010519174,

## Description

L'invention proposée se situe dans le domaine du conditionnement de puissance électrique et en particulier des systèmes de conversion de puissance électrique modulaire.

L'objectif de cette invention est de réaliser un système de conversion de puissance électrique modulaire à partir d'un pont asymétrique monophasé à deux interrupteurs (en anglais forward dual switches bridge) et de moyens redresseurs avec ou sans post régulation directe (en anglais forward post régulation), associés chacun à un transformateur.

Classiquement, il est connu de mettre en oeuvre une distribution de puissance électrique par des modules séparés intégrant le même transformateur lorsque le transformateur est branché sur une source alternative symétrique.

De même, la distribution de puissance par des modules, pourvus de post régulateurs de type dissipatif ou de type magnétique, et intégrant un même transformateur, est classiquement connu lorsque le transformateur est branché sur un onduleur à pont symétrique, alimenté par une source de tension et courant continus, et fonctionnant comme une source alternative.

L'association, au travers d'un même transformateur, d'une structure de pont asymétrique à deux interrupteurs commandée en rapport cyclique fixe ou régulée à une distribution modulaire de modules ayant des post régulateurs de type direct (forward) à régulation magnétique est déjà moins connu mais très bien décrite dans l'article de Shiguo Luo, intitulé « A High-Frequency AC Distributed Power System with Dual PWM Buses » et tiré de la revue IEEE Transactions on Power Electronics 2003.

Cette association présente par rapport aux structures symétriques classiques une simplification des étages redresseurs et des étages de régulation, ce qui rend ce système de conversion de puissance électrique modulaire attrayant pour de très faibles puissances.

Il est tentant d'étendre cette dernière architecture ou ce dernier concept à une distribution de puissance par des modules, incluant ou non des post régulateurs de type magnétique ou dissipatif, alimentés par un pont asymétrique à deux interrupteurs et intégrant chacun un transformateur différent, la mise en parallèle des transformateurs étant simplement réalisée du côté du pont asymétrique au travers des enroulements primaires des transformateurs.

Toutefois, cette architecture, non proposée à ce jour, de système de conversion de puissance électrique modulaire conduit à des pertes d'énergie électrique très importantes, des saturations de transformateurs inacceptables dès que les régimes de courant sont déséquilibrés entre les différentes sorties des modules. Ces problèmes font perdre même tout l'intérêt de ce concept dans cette mise en oeuvre trop simple.

Il est à remarquer que ces problèmes sont inexistants lorsqu'un seul transformateur est centralisé sur le pont asymétrique et dans le cas de structures symétriques équilibrées, alimentées par un pont symétrique.

Le problème technique est donc d'éviter, pour des systèmes de conversion de puissance électrique modulaires ayant un pont asymétrique à deux interrupteurs alimentés par une source de tension et de courant continus, et ayant un transformateur différent pour chaque module de sortie, des pertes d'énergie électriques importantes causées par les saturations des transformateurs dès que les régimes de courant sont déséquilibrés entre les différentes sorties.

Un problème connexe est d'éviter au maximum la dégradation du rendement de distribution de puissance par module de sortie, ces derniers étant pourvus le cas échéant de post régulateurs magnétiques ou dissipatifs du type direct.

A cet effet, l'invention a pour objet un système de conversion continu/continu d'énergie électrique modulaire à plusieurs modules, destiné à convertir de l'énergie électrique, fournie par une source d'alimentation en énergie électrique délivrant une première tension différentielle d'entrée continue et un premier courant d'entrée continu, en de l'énergie électrique délivrée en sortie d'au moins deux modules de conversion redresseurs différents,

le système de conversion comprenant
une première borne d'alimentation et une deuxième borne d'alimentation, configurées pour être connectées à la source d'alimentation et recevoir respectivement une première tension d'alimentation Vc1 et une deuxième tension d'alimentation Vc2 continues, la première tension d'alimentation Vc1 étant supérieure à la deuxième tension d'alimentation Vc2, et
un convertisseur primaire monophasé, ayant une structure de pont asymétrique commandée en rapport cyclique fixe ou régulée, et
et un nombre N, supérieur ou égal à deux, de modules de conversion redresseurs, connectés en entrée du convertisseur primaire monophasé,
le convertisseur primaire comprenant un premier ensemble d'au moins une branche de pont et un deuxième ensemble d'au moins une branche de pont, chaque branche de pont étant branchée entre la première et la deuxième bornes d'alimentation,
une branche quelconque du premier ensemble étant formée d'un premier interrupteur électronique différent commandé par un premier moyen de commande, et d'une première diode de roue libre et de démagnétisation, connectée en série au premier interrupteur en une première borne intermédiaire associée et à la deuxième borne d'alimentation,
une branche quelconque du deuxième ensemble étant formée d'un deuxième interrupteur électronique différent commandé par un deuxième moyen de commande, et d'une deuxième diode de roue libre et de démagnétisation, connectée en série au deuxième interrupteur en une deuxième borne intermédiaire associée et à la première borne d'alimentation,
caractérisé en ce que
au moins un ensemble de branches parmi le premier ensemble et le deuxième ensemble de branches possède un nombre de branches égal au nombre N de modules de conversion, l'autre ensemble possédant nombre de branches égal à un ou au nombre de modules de conversion, et
les premier et deuxième moyens de commande sont configurés pour commander de manière périodique en conduction et en même temps la totalité des interrupteurs, la tension Ve1 délivrée à chaque première borne intermédiaire étant supérieure à la tension Ve2 délivrée à chaque deuxième borne intermédiaire lorsque les premier et deuxième interrupteurs sont en conduction simultanée,
chaque module de conversion redresseur est connecté en entrée entre une première borne intermédiaire et une deuxième borne intermédiaire du convertisseur primaire monophasé, les premières bornes intermédiaires associées à une paire quelconque de modules étant différentes lorsque le nombre de branche du premier ensemble de branches est différent de un, les deuxièmes bornes intermédiaires associées à une paire quelconque de modules étant différentes lorsque le nombre de branches du deuxième ensemble de branches est différent de un, et
chaque module de conversion comprend un transformateur différent ayant un enroulement primaire différent et unique, l'enroulement primaire étant branché entre une première borne et une deuxième borne intermédiaire associées du convertisseur primaire monophasé, et ayant au moins un enroulement secondaire.

Suivant des modes particuliers de réalisation, le système de conversion continu/continu d'énergie électrique modulaire comporte une ou plusieurs des caractéristiques suivantes :
- le premier ensemble de branches comporte une unique branche formée d'un premier interrupteur électronique et d'une première diode de démagnétisation,
   le deuxième ensemble de branches de pont comporte plusieurs deuxièmes branches dont le nombre est égal au nombre N de module de conversion, et
   chaque deuxième branche est associée à un module de conversion différent, est formée respectivement d'un deuxième interrupteur électronique et d'une deuxième diode de démagnétisation connectés en série entre eux en un deuxième point intermédiaire, le deuxième interrupteur étant connecté à la deuxième borne d'alimentation et la deuxième diode de démagnétisation étant connectée à la première borne d'alimentation, le deuxième point intermédiaire étant connecté à l'enroulement primaire du transformateur du module de conversion associé ;
- les deuxièmes moyens de commande comprennent un unique amplificateur de commande ayant une sortie commune connectée directement à chaque deuxième interrupteur sans élément actif intermédiaire ;
- les deuxièmes moyens de commande comprennent un amplificateur de sortie différent connecté en entrée de chaque deuxième interrupteur ;
- le deuxième ensemble de branches comporte une unique deuxième branche formée d'un deuxième interrupteur et d'une deuxième diode de démagnétisation,
   le premier ensemble de branches comporte plusieurs premières branches dont le nombre est égal au nombre N de modules de conversion, et
   chaque première branche est associée à un module de conversion différent, est formée d'un premier interrupteur et d'une première diode de démagnétisation connectés en série entre eux en un premier point intermédiaire, le premier interrupteur étant connecté à la première borne d'alimentation et la première diode de démagnétisation étant connectée à la deuxième borne d'alimentation, le premier point intermédiaire étant connecté à l'enroulement primaire du transformateur du module de conversion associé,
   et les premiers moyens de commande comprennent un amplificateur de sortie différent, connecté en entrée de chaque premier interrupteur associé ;
- le système de conversion comprend plusieurs câbles de liaison dont le nombre est égal au nombre de modules de conversion,
   chaque câble étant associé à un module de conversion unique et différent, et chaque câble étant une liaison torsadée bifilaire blindée ayant respectivement un premier fil, et un deuxième fil, le premier fil reliant le premier point intermédiaire et une première extrémité de l'enroulement primaire du module de conversion associé, le deuxième fil reliant le deuxième point intermédiaire et la deuxième extrémité de l'enroulement primaire du module de conversion associé ;
- chaque module de conversion comprend associés de manière propre pour chacun des ses enroulements secondaires, un redresseur monophasé différent, une cellule de filtrage d'ondulations résiduelles différente, une paire distincte de bornes de sortie d'extrémité modulaire, chaque enroulement secondaire, le redresseur et la cellule de filtrage qui lui sont associés étant configurés pour convertir l'énergie électrique fournie en sortie du convertisseur primaire monophasé, en de l'énergie électrique délivrée sur la paire de bornes de sortie d'extrémité modulaire correspondante, sous une tension différentielle de sortie modulaire prédéterminé pour un courant de charge de sortie modulaire prédéterminé ;
- chaque interrupteur est compris dans l'ensemble formé par les transistors bipolaires, les transistors de technologie MOS, les transistors de type IGBT, et les thyristors de type GTO ;
- au moins un module de conversion comprend un régulateur de sortie d'une de ses tensions différentielles de sortie, le régulateur étant compris dans l'ensemble formé par les régulateur de type ballast et les régulateur magnétiques ;
- le convertisseur primaire monophasé a une structure de pont asymétrique commandée en rapport cyclique régulée et comprend un générateur de signal de commande destiné fournir un signal de commande aux interrupteurs,
   le générateur de signal de commande comporte une borne de sortie de commande pour délivrer un signal de commande de sortie, et une borne de réception d'une tension image représentative, soit de la différence entre la première tension d'alimentation et la deuxième tension d'alimentation, soit une tension différentielle fournie entre une première borne de sortie et une deuxième borne de sortie d'un module de conversion destiné à fournir l'énergie électrique de sortie la plus grande parmi les énergies électriques de sortie de tous les modules de conversion, et
   le signal de commande fourni par le générateur en sa borne de sortie de commande est un signal séquentiel à impulsions modulées en largeur, la modulation de la largeur dépendant la tension image reçue à la borne de réception.

L'invention sera mieux comprise et d'autres avantages de celle-ci apparaîtront plus clairement à la lecture de la description qui va suivre de plusieurs formes de réalisation de l'invention, donnée uniquement à titre d'exemple et faite en se référant aux dessins annexés dans lesquels :

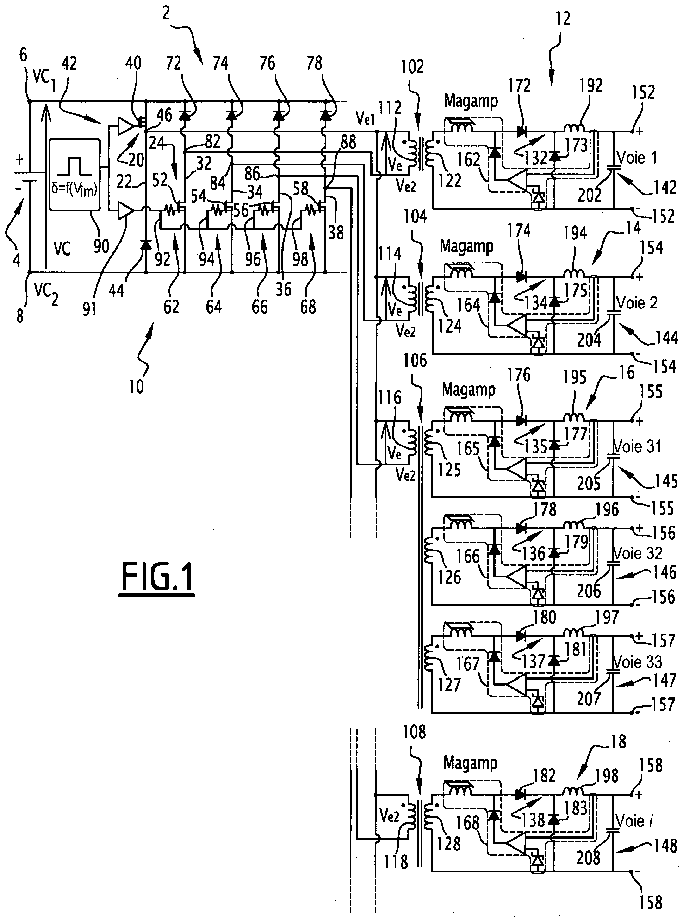

- la Figure 1 est une représentation sous la forme d'un schéma électrique d'un premier mode de réalisation d'un système de conversion d'énergie électrique modulaire, dans lequel les modules de conversion redresseurs de sortie comprennent chacun un transformateur différent alimenté à partir d'un pont asymétrique, et dans lequel chaque interrupteur d'un premier ensemble, connecté à un unique et différent transformateur en une borne intermédiaire différente, est connecté en la même borne à une diode de démagnétisation différente, elle-même connectée à la borne d'alimentation destinée à être mise à la tension d'alimentation la plus élevée ;

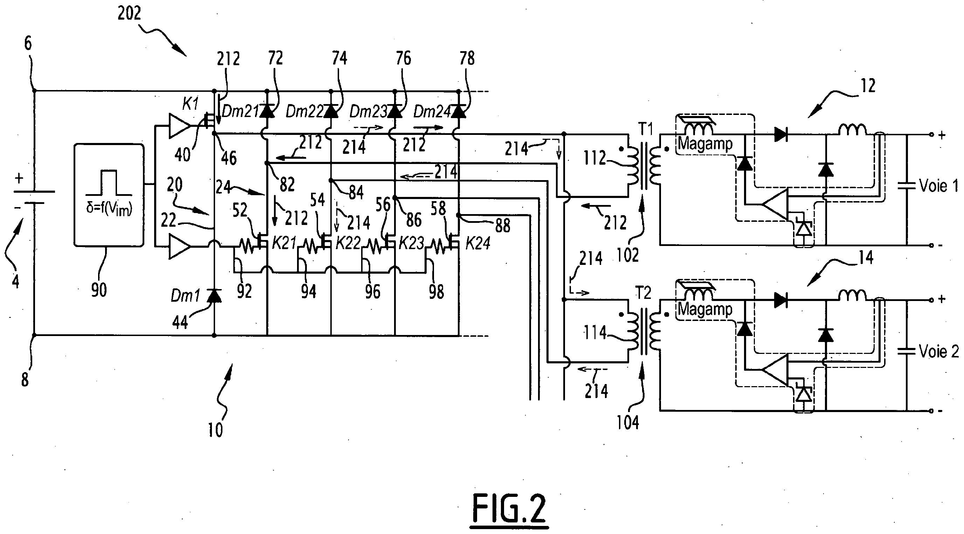

- la Figure 2 est un schéma électrique simplifié à deux modules de conversion du premier mode de réalisation décrit à la Figure 1, dans lequel sont mises en évidence les circulations de courant électriques traversant les enroulements des transformateurs lors des phases de magnétisation des transformateurs ;

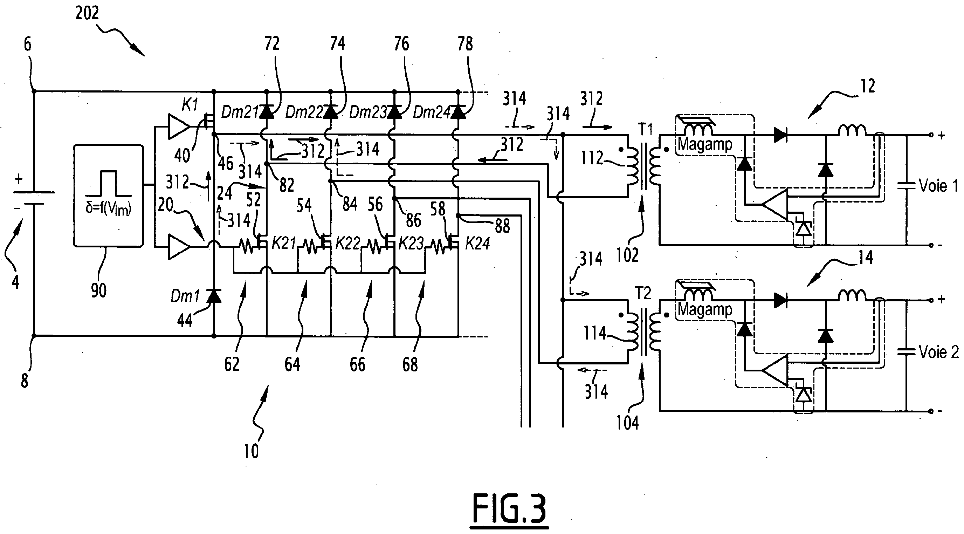

- la Figure 3 est un schéma électrique simplifié à deux modules de conversion du premier mode de réalisation décrit à la Figure 1, identique à celui de la Figure 2, dans lequel sont mises en évidence les circulations de courant électriques traversant les enroulements des transformateurs lors des phases de démagnétisation des transformateurs ;

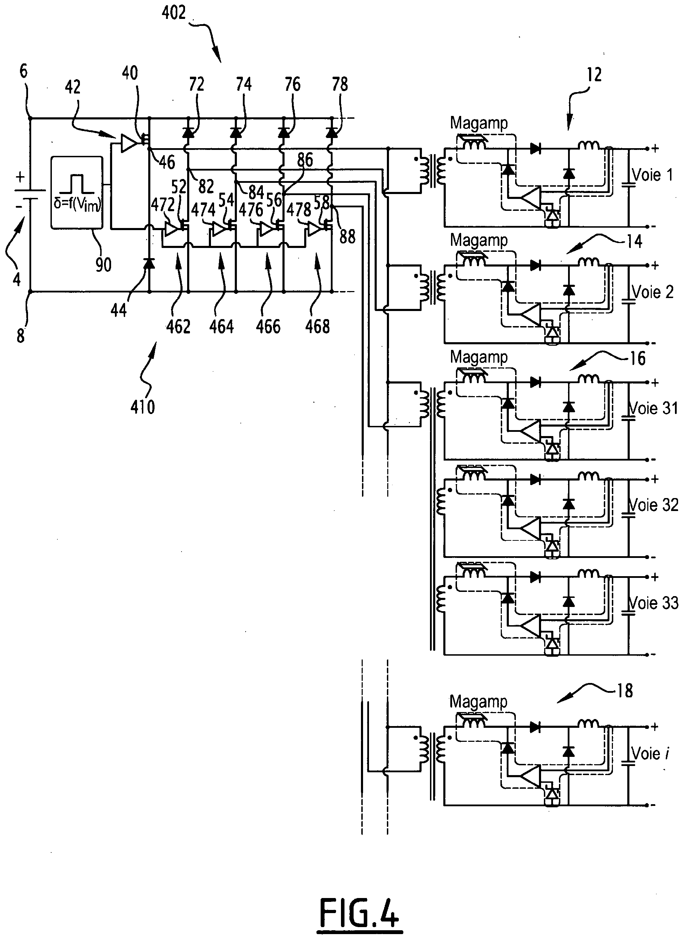

- la Figure 4 est un schéma électrique d'un deuxième mode de réalisation d'un système de conversion d'énergie électrique modulaire, dérivé du premier mode de réalisation de la Figure 1, dans lequel chaque interrupteur, connecté à unique et différent transformateur, est piloté par un amplificateur de commande d'entrée différent ;

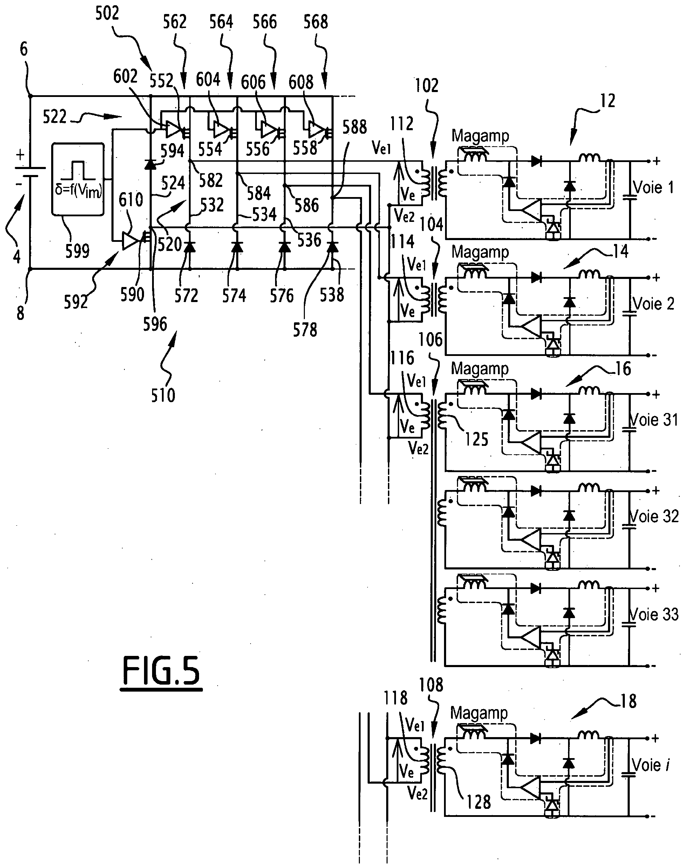

- la Figure 5 est un schéma électrique d'une troisième forme de réalisation d'un système de conversion d'énergie électrique modulaire dans lequel les modules de conversion redresseurs de sortie comprennent chacun un transformateur différent alimenté à partir d'un pont asymétrique, et dans lequel chaque interrupteur d'un premier ensemble, connecté à un unique et différent transformateur en une borne intermédiaire différente, est connecté en la même borne à une diode de démagnétisation différente, elle-même connectée à la borne d'alimentation destinée à être mise à la tension d'alimentation la moins élevée ;

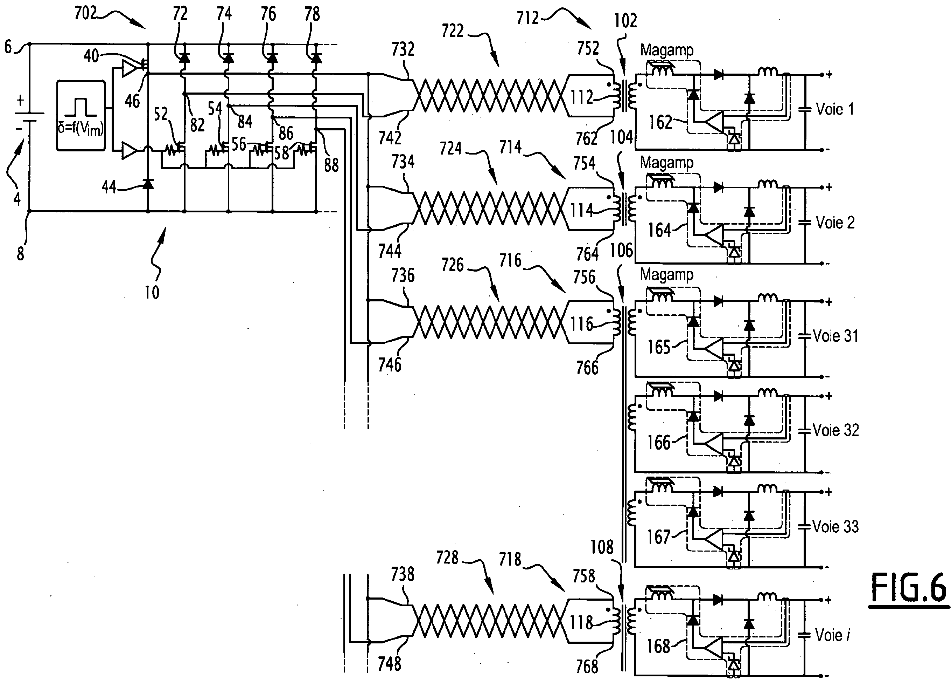

- la Figure 6 est un schéma électrique d'un quatrième mode de réalisation d'un système de conversion d'énergie électrique modulaire, dérivé du premier mode de réalisation de la Figure 1, dans lequel les modules sont déportés du pont asymétrique par un câble différent reliant le transformateur au pont asymétrique.

Suivant la Figure 1, le système de conversion continu/continu d'énergie électrique modulaire 2 est connecté en entrée à une source d'alimentation 4 délivrant une tension différentielle Vc et un courant continus, par exemple une batterie.

Le système de conversion continu/continu et de distribution d'énergie électrique modulaire 2 est configuré pour convertir l'énergie électrique, fournie par la source d'alimentation 4 en de énergie électrique délivrée en sortie d'au moins deux modules de conversion redresseurs.

Le système de conversion continu/continu d'énergie électrique modulaire 2 comprend une première borne d'alimentation 6 et une deuxième borne d'alimentation 8, un convertisseur primaire monophasé 10, et au moins deux modules de conversion redresseurs, quatre modules de conversion redresseurs 12, 14, 16, 18 étant représentés sur la Figure 1.

La première borne d'alimentation 6 et la deuxième borne d'alimentation 8 sont configurées pour être connectées à la source d'alimentation continue 4 et recevoir respectivement une première tension d'alimentation Vc1 et une deuxième tension d'alimentation Vc2 continues, la première tension d'alimentation Vc1 appliquée à la première borne 6 étant supérieure à la deuxième tension d'alimentation Vc2 appliquée à la deuxième borne 8.

Le convertisseur primaire monophasé 10 a une structure de pont asymétrique à plusieurs interrupteurs électroniques commandés en rapport cyclique fixe ou régulé.

Le convertisseur primaire monophasé 10 comprend un premier ensemble 20 de branches de pont, formé d'une unique branche 22 de pont, et un deuxième ensemble 24 d'un nombre entier N de branches de pont, N désignant le nombre total, supérieur ou égal à deux, de modules de conversion redresseurs que comporte le système de conversion continu/continu 2. Ici, sur la Figure 1, quatre branches de pont 32, 34, 36, 38 sont seulement représentées et sont associées respectivement à un unique et différent module de conversion redresseur 12, 14, 16, 18.

Chaque branche de pont 22, 32, 34, 36, 38 des premier et deuxième ensembles 20, 22 est connectée entre la première borne 6 et la deuxième borne 8 d'alimentation.

La branche de pont 22 du premier ensemble est formée d'un premier interrupteur électronique 40, commandé par un premier moyen de commande 42, et d'une première diode de roue libre et de démagnétisation 44 connectée en série au premier interrupteur 40 en une première borne intermédiaire 46 associée et à la deuxième borne d'alimentation 8.

Chaque branche de pont 32, 34, 36, 38 du deuxième ensemble 24 est formée respectivement d'un deuxième interrupteur électronique unique différent 52, 54, 56, 58, commandé par un deuxième moyen de commande propre 62, 64, 66, 68, et d'une deuxième diode unique et différente 72, 74, 76, 78 de roue libre et de démagnétisation, connectée respectivement en série au premier interrupteur 52, 54, 56, 58 en une deuxième borne intermédiaire propre et différente 82, 84, 86, 88 associée et à la première borne d'alimentation 6.

Les premier et deuxième moyens de commande 42, 62, 64, 66, 68 sont configurés pour commander de manière périodique en conduction et en même temps les premier et deuxièmes interrupteurs 40, 52, 54, 56, 58, la tension Ve1 délivrée à la première borne intermédiaire 46 étant supérieure à la tension Ve2 délivrée en ayant la même valeur à chaque deuxième borne intermédiaire 82, 84, 86, 88 en ayant la même valeur lorsque les premier et deuxième interrupteurs 40, 52, 54, 56, 58 sont en conduction simultanée.

Le premier moyen de commande 42 comprend un générateur de signal de commande 90 à faible puissance qui est connecté en série à un amplificateur de commande, l'amplificateur de commande étant configuré pour adapter en puissance de commande le générateur de signal de commande 90 au premier interrupteur électronique 40.

Chaque deuxième moyen de commande 62, 64, 66, 68 comprend le même générateur de signal de commande 90 mis en commun, suivi d'un amplificateur de commande 91, différent de celui connecté au premier interrupteur 40.

L'amplificateur de commande 91 est connecté par une borne de sortie commune à et des branches différentes 92, 94, 96, 98 de dérivation de commande ayant chacune une résistance d'attaque correspondante, et connecté à un deuxième interrupteur associé 52, 54, 56, 58 différent.

Chaque module de conversion redresseur 12, 14, 16, 18 est connecté en entrée respectivement entre la première borne intermédiaire 46 et une deuxième borne intermédiaire correspondante 82, 84, 86, 88 du convertisseur primaire monophasé 10.

Chaque module de conversion 12, 14, 16, 18 comprend un transformateur différent 102, 104, 106, 108 ayant un enroulement primaire différent et unique 112, 114, 116, 118 et ayant au moins un enroulement secondaire.

L'enroulement primaire 112, 114, 116, 118 est branché entre la première borne intermédiaire 46 et la deuxième borne intermédiaire 82, 84, 86, 88 correspondante.

Ici, les transformateurs 102, 104, associés respectivement aux modules de conversion 12, 14 ont chacun un enroulement secondaire différent 122, 124, tandis que le transformateur du 106 du module 16 qui est à triple tensions de sortie possède trois enroulements secondaires distincts 125, 126, 127.

Le transformateur 108, associé au module de conversion 18 possède un unique enroulement secondaire 128.

Chaque module de conversion 12, 14, 16, 18 comprend, associés de manière propre pour chaque enroulement secondaire 122, 124, 125, 126, 127, 128, un redresseur monophasé différent 132, 134, 135, 136, 137, 138, une cellule différente 142, 144, 145, 146, 147, 148 de filtrage passe-bas des ondulations résiduelles, une paire distincte 152, 154, 155, 156, 157, 158 de bornes de sortie d'extrémité modulaire formant les voies désignées respectivement par « voie 1 », « voie 2 », « voie 31 », « voie 32 », « voie 33 », « voie i », et un régulateur direct de sortie 162, 164, 165, 166, 167, 168 différent.

Chaque redresseur monophasé 132 ; 134 ; 135 ; 136 ; 137 ; 138 est un circuit quadripôle, formé respectivement de deux diodes de redressement 172, 173 ; 174, 175 ; 176, 177 ; 178, 179 ; 180, 181 ; 182, 183 disposées selon une topologie en L, le quadripôle étant branché à la sortie de l'enroulement secondaire correspondant 122, 124, 125,126,127,128.

Chaque cellule de filtrage 142, 144, 145, 146, 147, 148 est un circuit quadripôle, formé respectivement d'une inductance 192, 194, 195, 196, 197, 198, montée en série, et d'une capacité 202, 204, 205, 206, 207, 208, montée en parallèle, et branchée en sortie du redresseur monophasé correspondant 132 ; 134 ; 135 ; 136 ; 137 138.

Chaque régulateur direct 162, 164, 165, 166, 167, 168 de sortie est compris dans l'ensemble formé par les régulateurs de type ballast et les régulateurs de type magnétique.

Les régulateurs de type Ballast sont branchés en aval des diodes de redressement tandis que la bobine de régulation post magnétique est branchée directement en sortie du transformateur.

Ici, les régulateurs directs de sortie 162, 164, 165, 166, 167, 168 sont des post régulateurs magnétiques, inscrits sur la Figure 1 dans des bordures en traits interrompus, et décrits par exemple dans le document intitulé « Bulletion SR-4 » et publié dans le bulletin technique de Magnetics. Butler, PA3.

Les enroulements 112, 114, 116, 118, 122, 124, 125, 126, 127, 128 des transformateurs 102, 104, 106, 108, les redresseurs 132, 134, 135, 136, 137, 138, les cellules de filtrage 142, 144, 145, 146, 147, 148, les régulateurs de sortie 162, 164, 165, 166, 167, 168 sont configurés pour convertir l'énergie électrique fournie en sortie 46, 82, 84, 86, 88 du convertisseur primaire monophasé 10 en de l'énergie électrique délivrée sur les paires de bornes de sorties d'extrémités modulaires sous des tensions différentielles de sorties modulaires correspondantes prédéterminées pour des courants de charge respectifs de sortie modulaire prédéterminés.

Le deuxième ensemble 24 par ses branches de ponts 32, 34, 36, 38 individualisées fournit une séparation du bras découpeur inférieur du convertisseur 10 pour chaque transformateur, permet de supprimer la possibilité de circulation de courants entre les enroulements primaires 112, 114, 116, 118 des transformateurs et permet des saturations indépendantes des transformateurs 102, 104, 106, 108.

Ainsi, pour chaque transformateur, la séparation du bras inférieur, formé par l'ensemble des interrupteurs électroniques connectés directement à la deuxième borne d'alimentation sous la tension la moins élevée, empêche la ou les causes de saturation liées à la mise en parallèle de transformateurs réels en régime dissymétrique, à savoir des possibilités de circulation de courant entre enroulement primaire suite à la présence de chutes de tensions différentes dans les résistances internes des transformateurs.

La séparation du bras inférieur en plusieurs deuxièmes branches procure un avantage supplémentaire de ne pas multiplier les amplificateurs de puissance d'entrée (drivers) ni d'augmenter leur puissance lorsque les technologies des interrupteurs le permettent, c'est-à-dire lorsque les interrupteurs commandées sont compris dan la famille des transistors bipolaires, des transistors à jonction de silicium-métal-oxyde MOS (en anglais Metal-Oxyde-Silicon), des transistors de type IGBT (en anglais Insulated Gate Bipolar Transistor) et des thyristors à extinction par la gâchette GTO (en anglais Gate Turn Off Thyrsitor).

Particulièrement lorsque les interrupteurs électroniques sont des transistors de type MOS, un seul amplificateur de commande peut être mis en commun par les deuxièmes interrupteurs électroniques.

En variante, un ou plusieurs modules de conversion sont dépourvus de régulateurs directs de sortie.

En variante, au moins deux modules de conversion redresseurs ont plusieurs sorties, c'est-à-dire chaque transformateur de ces modules possède plusieurs enroulements secondaires.

En variante chaque module de conversion redresseur a une voie de sortie unique et différente, c'est-à-dire chaque transformateur possède un enroulement secondaire unique et différent.

En variante, le système de conversion de puissance électrique comprend un seul module de conversion redresseur ayant une sortie de voie unique, les modules de conversion redresseurs restants ayant plusieurs sorties différentielles de sortie.

Selon les Figures 2 et 3, un système de conversion d'énergie électrique modulaire 202 simplifié, représentatif du fonctionnement du système de conversion d'énergie électrique modulaire 2 de la Figure 1 pour les étapes de magnétisation et de démagnétisation, comprend le même convertisseur primaire monophasé 10 que celui décrit à la Figure 1.

Le système de conversion d'énergie électrique modulaire 202 est supposé branché en entrée à la même source d'alimentation 4 de la Figure 1.

Le système de conversion 202 comprend ici seulement les deux modules de conversion 12 et 14 décrits à la Figure 1. En effet, il est suffisant pour décrire le fonctionnement général de l'invention décrite à la Figure 1 de se restreindre à deux modules de conversion quelconques du système de conversion 2.

Par commodité de notation, le premier interrupteur électronique 40 unique et la première de diode de roue libre et de démagnétisation 44 de la branche 22 unique du premier ensemble 20 de branches sont désignés respectivement par K1 et Dm1.

De même, pour le deuxième ensemble 24 de branches, le deuxième interrupteur électronique 52 et la deuxième diode de roue libre et de démagnétisation 72 de la branche 32, le deuxième interrupteur électronique 54 et la deuxième diode de roue libre et de démagnétisation 74 de la branche 34, le deuxième interrupteur électronique 56 et la deuxième diode de roue libre et de démagnétisation 76 de la branche 36, le deuxième interrupteur électronique 58 et la deuxième diode de roue libre et de démagnétisation 78 de la branche 38, sont désignés respectivement par K21, Dm21, K22, Dm22, K23, Dm23, K24, Dm24.

De même, le transformateur 102 et le transformateur 104, faisant respectivement partie du module de conversion 12 et du module de conversion 14, sont respectivement désignés par la suite par T1 et T2.

Suivant la Figure 2, l'étape de magnétisation est décrite par une première série 212 de flèches en trait continu et une deuxième série de flèches 214 en traits interrompus représentant respectivement le sens du courant électrique traversant l'enroulement primaire 112 du transformateur T1 et le sens du courant électrique traversant l'enroulement primaire 114 du transformateur T2.

Le courant électrique i1 + imag 1 dont le trajet est décrit par la série de flèches 212 part de la première borne d'alimentation 6 et traverse successivement le premier interrupteur K1, l'enroulement primaire 112 du transformateur T1, la deuxième borne intermédiaire 82, le deuxième interrupteur K21.

Le courant électrique i2 + imag 2 dont le trajet est décrit par la série de flèches 214 part de la première borne d'alimentation 6 et traverse successivement le premier interrupteur K1, l'enroulement primaire 114 du transformateur T2, la deuxième borne intermédiaire 84, le deuxième interrupteur K22.

Durant la phase de conduction simultanée des interrupteurs K1, K21, K22, il est assuré qu'aucun échange de courant ne se produit entre les transformateurs T1 et T2 lors de la magnétisation séparée des transformateurs T1 et T2.

Ce fonctionnement peut être généralisé à une paire quelconque de transformateurs Ti, Tj avec les indices i et j compris entre 1 et 4, et i différent j, les transformateurs T3 et T4 étant respectivement les transformateurs 106, 108 de la Figure 1.

Suivant la Figure 3, la phase de démagnétisation qui succède à la phase de conduction des interrupteurs électroniques K1, K21, K22 est décrite par une première série 312 de flèches en trait continu et une deuxième série de flèches 314 en traits interrompus représentant respectivement le courant électrique traversant l'enroulement primaire 112 du premier transformateur T1 et le sens du courant électrique traversant l'enroulement primaire 114 du transformateur T2.

Le courant électrique i1 + imag1 dont le trajet est décrit par la série de flèches 312 part de la deuxième borne d'alimentation 8 et traverse successivement la première diode de roue libre et de démagnétisation Dm1, la première borne intermédiaire 46, l'enroulement primaire 112 du transformateur T1, la deuxième borne intermédiaire 82, la deuxième diode de démagnétisation Dm21.

Le courant électrique i2 + imag2 dont le trajet est décrit par la série de flèches 314 part de la deuxième borne d'alimentation 8 et traverse successivement la première diode de roue libre et de démagnétisation Dm1, la première borne intermédiaire 46, l'enroulement primaire 114 du transformateur T2, la deuxième borne intermédiaire 84, la deuxième diode de démagnétisation Dm22.

Lors de la démagnétisation, les interrupteurs indépendants K21, K22 sont à l'état ouvert et seules les diodes de démagnétisation Dm21, Dm22 permettent la démagnétisation de chaque transformateur de manière indépendante.

Durant la phase de démagnétisation, aucun échange de courant n'est possible entre les transformateurs T1 et T2 en raison des diodes de démagnétisation Dm21, Dm22 et de connexions séparées de chacune de ces diodes à un unique et différent enroulement primaire, au travers d'une deuxième borne intermédiaire différente 82, 84. Chacune des diodes de démagnétisation Dm21, Dm22 canalise séparément le courant de démagnétisation du transformateur correspondant T1, T2 auquel elle est raccordée directement ou au travers d'un fil.

Ainsi, durant la phase de démagnétisation, les interrupteurs indépendants K21, K22, K23, K24 sont tous à l'état ouvert et déconnectent de manière indépendante une des entrées de chaque transformateur sans interaction possible entre eux.

Selon la Figure 4, un deuxième mode de réalisation 402 du système de conversion est obtenu à partir du système de conversion 2 décrit la Figure 1, dans lequel tous les élément du système sont identiques et désignés par les mêmes références à l'exception du convertisseur primaire monophasé 410 qui remplace le convertisseur primaire monophasé 10 de la Figure 1.

Le convertisseur primaire 410 diffère du convertisseur primaire monophasé 10 en ce qu'il comprend des deuxièmes moyens de commande 462, 464, 466, 468, associés respectivement aux deuxièmes interrupteurs électroniques 52, 54, 56, 58, différents des moyens de commande 62, 64, 66, 68 du système de conversion 2.

Chaque deuxième moyen de commande 462, 464, 466, 468 comprend le même générateur de signal de commande 90 de la Figure 1 mis en commun, et, en dérivation un amplificateur de commande 472, 474, 476, 478, connecté en attaque d'entrée du deuxième interrupteur correspondant 52, 54, 56, 58, l'amplificateur de commande 472, 474, 476, 478 étant configuré pour adapter en puissance de commande le générateur de signal de commande 90 et le deuxième interrupteur électronique 552, 554, 556, 558 correspondant.

Cette configuration est avantageuse dans le cas où la technologie des interrupteurs exige des puissances de commande en entrée importante comme par exemple le cas des transistors bipolaires, des transistors MOS, des transistors de type IGBT, et des thyristors à extinction par la gâchette GTOs.

Suivant la Figure 5, un troisième mode de réalisation 502 du système de conversion continu/continu est dérivé du mode de réalisation 2 décrit à la Figure 1, dans lequel la source d'alimentation continue 4, les modules de conversion 12, 14, 16, 18, leurs éléments et leur agencement sont identiques à ceux décrits dans le système de conversion continu/continu 1 décrit à la Figure 1.

Dans ce troisième mode de réalisation, le convertisseur primaire monophasé 10 décrit à la Figure 1 est remplacé par un convertisseur primaire monophasé 510 différent.

Le convertisseur primaire monophasé 510 comprend un premier ensemble 520 de branches de pont et un deuxième ensemble 522 de branches de pont.

Le premier ensemble 520 de branches de pont est formé d'un nombre entier N de branches de pont, N désignant le nombre total, supérieur ou égal à deux, de modules de conversion redresseurs que comporte le système de conversion continu/continu 2.

Le deuxième ensemble 522 est formé d'une unique branche 524 de pont.

Ici, sur la Figure 1, du premier ensemble 520, quatre branches de pont 532, 534, 536, 538 sont seulement représentées et sont associées respectivement à un unique et différent module de conversion redresseur 12, 14, 16, 18.

Chaque branche de pont 532, 534, 536, 538, 524 des premier et deuxième ensembles 520, 522 est connectée entre la première borne 6 et la deuxième borne 8 d'alimentation.

Chaque branche de pont 532, 534, 536, 558 du premier ensemble 520 est formée respectivement d'un premier interrupteur unique différent 552, 554, 556, 558, commandé par un premier moyen de commande propre 562, 564, 566, 568, et d'une première diode unique et différente 572, 574, 576, 578 de roue libre de démagnétisation, connectée respectivement en série au premier interrupteur 552, 554, 556, 558 en une première borne intermédiaire propre et différente 582, 584, 586, 588, associée et à la deuxième borne d'alimentation 8.

La branche de pont 524 du deuxième ensemble 522 est formée d'un deuxième interrupteur électronique 590 unique commandé par un deuxième moyen de commande 592 et d'une deuxième diode de roue libre et de démagnétisation 594 unique connectée en série au deuxième interrupteur 590 en une deuxième borne intermédiaire 596 associée et à la première borne d'alimentation 6.

Les premier et deuxième moyens de commande 562, 564, 566, 568, 592 sont configurés pour commander de manière périodique en conduction et en même temps les premier et deuxième interrupteurs 552, 554, 556, 558, 590, la tension Ve1 délivrée à chacune des premières bornes intermédiaires 582, 584, 586, 588 étant supérieure à la même tension Ve2 délivrée à la deuxième borne intermédiaire 596 lorsque les premier et deuxième interrupteurs 552, 554, 556, 558, 590 sont en conduction simultanée. La tension différentielle Ve1-Ve2 est notée Ve.

Chaque premier moyen de commande 562, 564, 566, 568 comprend un même générateur de signal de commande 599 mis en commun, et, en dérivation un amplificateur de puissance 602, 604, 606, 608 unique et différent, connecté en attaque d'entrée du premier interrupteur correspondant 552, 554, 556, 558, l'amplificateur de puissance 602, 604, 606, 608 étant configuré pour adapter en puissance de commande le générateur de signal de commande 599 au premier interrupteur électronique 552, 554, 556, 558.

Le deuxième moyen de commande 592 comprend le générateur de signal de commande 599 à faible puissance et, connecté en série, un amplificateur de puissance 610 configuré pour adapter en puissance de commande le générateur de signal de commande 599 au deuxième interrupteur électronique 590.

Chaque module de conversion redresseur 12, 14, 16, 18 est connecté respectivement en entrée entre une première borne intermédiaire 582, 584, 586, 588 correspondante différente du convertisseur primaire monophasé 510 et la deuxième borne intermédiaire 596.

L'enroulement primaire 112, 114, 116, 118 du transformateur correspondant 102, 104, 106, 108 est branché entre la première borne intermédiaire 582, 584, 586, 588 correspondante et la deuxième borne intermédiaire 596.

Dans cette configuration où le bras de découpe supérieur du convertisseur primaire est séparé pour chaque transformateur, le premier ensemble de branches de pont qui comprend autant de premiers interrupteurs électroniques que de transformateurs requiert autant d'amplificateurs de commandes et cela indépendamment de la technologie utilisée. Les commandes sont en phase pour les premiers interrupteurs et sont électriquement flottantes de manière indépendante.

En d'autres termes, la solution qui multiplie le bras supérieur comme décrit à la Figure 5 impliquerait obligatoirement la multiplication des drivers de commande' des interrupteurs supérieurs et reste donc moins intéressante mais constitue aussi une solution.

Ici, chaque module de conversion comprend un post régulateur de type magnétique et l'un d'entre eux possède plusieurs voies de sortie c'est-à-dire plusieurs enroulements secondaires séparés.

En variante, au moins un module de conversion est dépourvu de régulateur de sortie direct.

En variante, le premier ensemble de branches de pont et le deuxième ensemble de branches de pont, c'est-à-dire le bras supérieur et le bras inférieur de découpe du convertisseur primaire, comprennent chacun autant de amplificateurs de commande que de modules de conversion redresseurs.

De manière générale un système de conversion continu/continu d'énergie électrique modulaire à plusieurs modules est destiné à convertir de l'énergie électrique, fournie par une source d'alimentation en énergie électrique délivrant une première tension différentielle d'entrée continue et un premier courant d'entrée continu, en de l'énergie électrique délivrée en sortie d'au moins deux modules de conversion différents.

Le système de conversion comprend une première borne d'alimentation et une deuxième borne d'alimentation configurées pour être connectées à la source d'alimentation et recevoir respectivement une première tension d'alimentation Vc1 et une deuxième tension d'alimentation Vc2 continues, la première tension d'alimentation Vc1 étant supérieure à la deuxième tension d'alimentation Vc2.

Le système de conversion comprend également un convertisseur primaire monophasée, ayant une structure de pont asymétrique commandée en rapport cyclique fixe ou régulée, et un nombre N, supérieur ou égal à deux, de modules de conversion redresseurs, connectés en entrée du convertisseur primaire monophasé.

Le convertisseur primaire comprend un premier ensemble d'au moins une branche de pont et un deuxième ensemble d'au moins une branche de pont, chaque branche étant branchée entre la première et la deuxième bornes d'alimentation.

Une branche quelconque du premier ensemble est formée d'un premier interrupteur différent commandé par un premier moyen de commande, et d'une première diode de roue libre et de démagnétisation, connectée en série au premier interrupteur en une première borne intermédiaire associée et à la deuxième borne d'alimentation.

Une branche quelconque du deuxième ensemble est formée d'un deuxième interrupteur différent commandé par un deuxième moyen de commande, et d'une deuxième diode de roue libre et de démagnétisation, connectée en série au premier interrupteur en une deuxième première borne intermédiaire associée et à la première borne d'alimentation.

Au moins un ensemble de branches parmi le premier ensemble et le deuxième ensemble de branches possède un nombre de branche égal a nombre de modules de conversion, l'autre ensemble possédant nombre de branches égal à un ou au nombre de modules de conversion.

Les premier et deuxième moyens de commande sont configurés pour commander de manière périodique en conduction et en même temps la totalité des interrupteurs, la tension délivrée à chaque première borne intermédiaire étant supérieure à la tension délivrée à chaque deuxième borne intermédiaire lorsque les premier et deuxième interrupteurs sont en conduction simultané.

Chaque module de conversion redresseur est connecté en entrée entre une première borne intermédiaire et une deuxième borne intermédiaires du convertisseur primaire monophasé, les premières bornes intermédiaires associées à une paire quelconque de modules étant différentes lorsque le nombre de branche du premier ensemble de branches est différent de un, les deuxièmes bornes intermédiaires associées à une paire quelconque de modules étant différentes lorsque le nombre de branche du deuxième ensemble de branches est différent de un.

Chaque module de conversion comprend un transformateur différent ayant un enroulement primaire différent et unique, l'enroulement primaire étant branché entre une première et une deuxième borne intermédiaires associées du convertisseur primaire monophasé, et ayant au moins un enroulement secondaire.

Le module de conversion comprend, associés de manière propre pour chaque enroulement secondaire, un redresseur monophasé différent, une cellule de filtrage d'ondulations résiduelles différente, une paire distincte de bornes de sortie d'extrémité modulaire, l'enroulement secondaire couplé à l'enroulement primaire, le redresseur, la cellule de filtrage, la paire de borne de sortie étant configurés pour convertir l'énergie électrique fournie en sortie du convertisseur primaire monophasé en de l'énergie électrique délivrée sur la paire de bornes de sortie d'extrémité modulaire, sous une tension différentielle de sortie modulaire prédéterminé pour un courant de charge de sortie modulaire prédéterminé.

Suivant la Figure 6, un quatrième mode de réalisation 702 du système de conversion continu/continu est dérivé directement du système de conversion 2, décrit à la Figure 1, en déportant à distance du convertisseur primaire 10 par des câbles les transformateurs 102, 104, 106, 108 des modules de conversion redresseurs.

Le système de conversion continu/continu 702 comprend le même convertisseur primaire 10 que celui décrit à la Figure 1 et plusieurs modules de conversion redresseurs, quatre seulement étant représentés ici, désignés respectivement par les références 712, 714,716,718,718.

Les modules de conversion redresseurs 712, 714, 716, 718 sont respectivement les modules de conversion 12, 14, 16, 18 dans chacun desquels un câble différent 722, 724, 726, 728 de liaison torsadée bifilaire blindé a été incorporé.

Chaque câble 722, 724, 726, 728 comprend un premier fil 732, 734, 736, 738 et un deuxième fil 742, 744, 746, 748, connectés respectivement à une extrémité différente de l'enroulement primaire 112, 114, 116, 118 du module de conversion redresseur correspondant 712, 714, 716, 718.

Chaque premier fil 732, 734, 736, 738 est connecté respectivement entre, du côté du convertisseur primaire 10, la première borne intermédiaire 46, et du côté du transformateur correspondant 102, 104, 106, 108, une première extrémité 752, 754, 756, 758 de l'enroulement primaire 112, 114, 116, 118 du transformateur correspondant 102, 104, 106, 108.

Chaque deuxième fil 742, 744, 746, 748 est connecté respectivement entre, du côté du convertisseur primaire 10, la deuxième borne intermédiaire 82, 84, 86, 88 du module de conversion correspondant 712, 714, 716, 718, et du côté du transformateur correspondant 102, 104, 106, 108, un deuxième extrémité 762, 764, 766, 768 de l'enroulement primaire 112, 114, 116, 118 du transformateur correspondant 102, 104, 106, 108.

Cette mise en oeuvre, proposée dans la Figure 6, d'une distribution modulaire de puissance déportée à partir d'un pont asymétrique et au travers de liaisons bifilaires torsadées, est pratique et intéressante dans le cas où il existe des contraintes physiques qui imposent l'éloignement depuis le convertisseur primaire des transformateurs des modules de conversion redresseurs. Par exemple, une telle distribution est applicable à l'architecture d'un bus d'alimentation d'un satellite.

De manière générale, le nombre des câbles de liaison est égal au nombre de modules de conversion et chaque câble formant une liaison bifilaire torsadée relie le convertisseur primaire à un module de conversion redresseur unique et différent.

Chaque câble, associé à un module de conversion unique et différent, comprend un premier fil et un deuxième fil.

Chaque interrupteur décrit dans les différentes solutions du pont asymétrique est compris dans l'ensemble formé par les transistors bipolaires, les transistors de technologie MOS (en anglais Metal Oxide Semiconductor), les IGBTs (en anglais Insulated Gate Bipolar Transistor), et les thyristors.

Lorsque le module de conversion est un module post régulateur, le régulateur de sortie de l'une des tensions différentielles de sortie est un régulateur compris dans l'ensemble formé par les régulateurs de type ballast, les régulateurs de type magnétique et les régulateurs à découpage.

Lorsque des régulateurs à découpage sont utilisés, de manière connue deux types de découpage peuvent être mis en oeuvre.

Dans un premier type de découpage, non synchronisé et indépendant, un convertisseur DC/DC à découpage est rajouté sans isolation galvanique après le redresseur monophasé et la cellule de filtrage.

Dans un deuxième type de découpage, synchronisé et dépendant, un redressement contrôlé remplace le redressement à diode simple par la mise en oeuvre d'une fonction combinant diode et interrupteur série.

Lorsque le convertisseur primaire monophasé a une structure de pont asymétrique à plusieurs interrupteurs électroniques commandés en rapport cyclique régulé, divers types de régulation du système peuvent être proposées.

Suivant un premier exemple de régulation dénommée « prérégulation primaire », le générateur de signal de commande 90, destiné fournir un signal de commande aux interrupteurs, comporte une borne de sortie de commande pour délivrer un signal de commande de sortie, et une borne de réception d'une tension image Vim.

La tension image Vim est représentative de la différence entre la première tension d'alimentation et la deuxième tension d'alimentation.

Le signal de commande fourni par le générateur en sa borne de sortie de commande est un signal séquentiel à impulsions modulées en largeur de type PWM (dénommé en anglas Pulse Width Modulation), la modulation de la largeur δ dépendant la tension image Vim reçue à la borne de réception.

Suivant un deuxième exemple de régulation dénommée « régulation d'un secondaire sur primaire », le générateur de signal de commande 90 est également un générateur de signal PWM dont la largeur δ modulée dépend de la tension image Vim reçue à la borne de réception.

Dans le deuxième exemple, la tension image Vim est représentative d'une tension différentielle fournie entre une première borne de sortie et une deuxième borne de sortie d'un module de conversion destiné à fournir l'énergie électrique de sortie la plus grande parmi les énergies électriques de sortie de tous les modules de conversion.

Les fonctions de modulation des premier et deuxième exemples sont de préférence des fonctions linéaires en Vim, d'autres formes de variation étant possibles.

## Revendications

1. Système de conversion continu/continu d'énergie électrique modulaire à plusieurs modules, destiné à convertir de l'énergie électrique, fournie par une source d'alimentation (4) en énergie électrique délivrant une première tension différentielle d'entrée continue et un premier courant d'entrée continu, en de l'énergie électrique délivrée en sortie d'au moins deux modules de conversion redresseurs différents,
le système de conversion comprenant
une première borne d'alimentation (6) et une deuxième borne d'alimentation (8), configurées pour être connectées à la source d'alimentation (4) et recevoir respectivement une première tension d'alimentation Vc1 et une deuxième tension d'alimentation Vc2 continues, la première tension d'alimentation Vc1 étant supérieure à la deuxième tension d'alimentation Vc2, et
un convertisseur primaire monophasé (10 ; 510), ayant une structure de pont asymétrique commandée en rapport cyclique fixe ou régulée, et
et un nombre N, supérieur ou égal à deux, de modules de conversion redresseurs, connectés en entrée du convertisseur primaire monophasé (10 ; 510),
le convertisseur primaire (10 ; 510) comprenant un premier ensemble (20 ; 520) d'au moins une branche de pont (22 ;532, 534, 536, 538) et un deuxième ensemble (24 ; 522) d'au moins une branche de pont (32, 34, 36, 38 ; 524), chaque branche de pont (22, 32, 34, 36, 38 ; 524, 532, 534, 536, 538) étant branchée entre la première et la deuxième bornes d'alimentation (6,8),
une branche quelconque (22 ; 532, 534, 536, 538) du premier ensemble (20 ; 520) étant formée d'un premier interrupteur électronique différent (40 ; 552, 554, 556, 558) commandé par un premier moyen de commande (42 ; 562, 564, 566, 568), et d'une première diode de roue libre et de démagnétisation (44 ; 572, 574, 576, 578), connectée en série au premier interrupteur (40 ; 552, 554, 556, 558) en une première borne intermédiaire associée (46 ; 582, 584, 586, 588) et à la deuxième borne d'alimentation (8),
une branche quelconque (32, 34, 36, 38 ; 524) du deuxième ensemble (24 ; 522) étant formée d'un deuxième interrupteur électronique différent (52, 54, 56, 58 ; 590). commandé par un deuxième moyen de commande (62, 64, 66, 68 ; 592), et d'une deuxième diode de roue libre et de démagnétisation (72, 74, 76, 78 ; 594), connectée en série au deuxième interrupteur (52, 54, 56, 58 ; 590) en une deuxième borne intermédiaire associée (82, 84, 86, 88 ; 596) et à la première borne d'alimentation (6),
**caractérisé en ce que**
au moins un ensemble de branches (20 ; 522) parmi le premier ensemble et le deuxième ensemble (20, 24 ; 520, 522) de branches possède un nombre de branches égal au nombre N de modules de conversion (12, 14, 16, 18), l'autre ensemble (24 ; 520) possédant nombre de branches égal à un ou au nombre de modules de conversion, et
les premier et deuxième moyens de commande (42, 62, 64, 66, 68 ; 562, 564, 566, 568, 592) sont configurés pour commander de manière périodique en conduction et en même temps la totalité des interrupteurs (40, 52, 54, 56, 58 ; 552, 554, 556, 558, 590), la tension Ve1 délivrée à chaque première borne intermédiaire (46 ; 582, 584, 586, 588) étant supérieure à la tension Ve2 délivrée à chaque deuxième borne intermédiaire (82, 84, 86, 88 ; 596) lorsque les premier et deuxième interrupteurs (42, 53, 54, 56, 58, 552, 554, 556, 558, 590) sont en conduction simultanée,
chaque module de conversion redresseur (12, 14, 16, 18) est connecté en entrée entre une première borne intermédiaire (46 ; 582, 584, 586, 588) et une deuxième borne intermédiaire (82, 84, 86, 88 ; 596) du convertisseur primaire monophasé (10 ; 510), les premières bornes intermédiaires (582, 584, 586, 588) associées à une paire quelconque de modules étant différentes lorsque le nombre de branche du premier ensemble de branches (520) est différent de un, les deuxièmes bornes intermédiaires (82, 84, 86, 88) associées à une paire quelconque de modules (12, 14, 16,18) étant différentes lorsque le nombre de branches du deuxième ensemble de branches (24) est différent de un, et
chaque module de conversion (12, 14, 16, 18) comprend un transformateur différent (102, 104, 106, 108) ayant un enroulement primaire (112, 114, 116, 118) différent et unique, l'enroulement primaire (112, 114, 116, 118) étant branché entre une première borne (46 ; 582, 584, 586, 588) et une deuxième borne intermédiaire (82, 84, 86, 88 ; 596) associées du convertisseur primaire monophasé (10; 510), et ayant au moins un enroulement secondaire (122, 124, 125, 126, 127, 128).

2. Système de conversion selon la revendication 1 dans lequel
le premier ensemble (20) de branches comporte une unique branche (22) formée d'un premier interrupteur électronique (40) et d'une première diode de démagnétisation (44),
le deuxième ensemble (24) de branches de pont comporte plusieurs deuxièmes branches (32, 34, 35, 36, 37 , 38) dont le nombre est égal au nombre N de module de conversion, et
chaque deuxième branche (32, 34, 36, 38) est associée à un module de conversion (12, 14, 16, 18) différent, est formée respectivement d'un deuxième interrupteur électronique (52, 54, 56, 58) et d'une deuxième diode de démagnétisation (72, 74, 76, 78) connectés en série entre eux en un deuxième point intermédiaire (82, 84, 86, 88), le deuxième interrupteur (52, 54, 56, 58) étant connecté à la deuxième borne d'alimentation (8) et la deuxième diode de démagnétisation (72, 74, 76, 78) étant connectée à la première borne d'alimentation (6), le deuxième point intermédiaire (82, 84, 86, 88) étant connecté à l'enroulement primaire (112, 114, 116, 118) du transformateur (102, 104, 106, 108) du module de conversion associé (12, 14, 16, 18).

3. Système de conversion selon la revendication 2 dans lequel les deuxièmes moyens de commande (62, 64, 66, 68) comprennent un unique amplificateur de commande (91) ayant une sortie commune connectée directement à chaque deuxième interrupteur (52, 54, 56, 58) sans élément actif intermédiaire.

4. Système de conversion selon la revendication 2 dans lequel les deuxièmes moyens de commande comprennent un amplificateur de sortie différent connecté en entrée de chaque deuxième interrupteur.

5. Système de conversion selon la revendication 1 dans lequel le deuxième ensemble de branches (522) comporte une unique deuxième branche (524) formée d'un deuxième interrupteur (590) et d'une deuxième diode de démagnétisation (594),
le premier ensemble de branches (520) comporte plusieurs premières branches (532, 534, 536, 538) dont le nombre est égal au nombre N de modules de conversion, et
chaque première branche (532, 534, 536, 538) est associée à un module de conversion différent (12, 14, 16, 18), est formée d'un premier interrupteur (552, 554, 556, 558) et d'une première diode de démagnétisation (572, 574, 576, 578) connectés en série entre eux en un premier point intermédiaire (582, 584, 586, 588), le premier interrupteur (552, 554, 556, 558) étant connecté à la première borne d'alimentation (6) et la première diode de démagnétisation (572, 574, 576, 578) étant connectée à la deuxième borne d'alimentation (596), le premier point intermédiaire (582, 584, 586, 588) étant connecté à l'enroulement primaire (112, 114, 116, 118) du transformateur du module de conversion associé,
et les premiers moyens de commande (562, 564, 566, 568) comprennent un amplificateur de sortie différent (602, 604, 606), connecté en entrée de chaque premier interrupteur associé (552, 554, 556, 558).

6. Système de conversion selon l'une quelconque des revendications 1 à 5, comprenant plusieurs câbles de liaison (722, 724, 726, 728) dont le nombre est égal au nombre de modules de conversion (12, 14, 16, 18),
chaque câble (722, 724, 726, 728) étant associé à un module de conversion unique et différent (12, 14, 16, 18), et chaque câble étant une liaison torsadée bifilaire blindée ayant respectivement un premier fil (732, 734, 736) et un deuxième fil (742, 744, 746, 748), le premier fil (732, 734, 736, 738) reliant le premier point intermédiaire (46) et une première extrémité (752, 754, 756, 758) de l'enroulement primaire (112, 114, 116, 118) du module de conversion associé, le deuxième fil (742, 744, 746, 748) reliant le deuxième point intermédiaire (82, 84, 86, 88) et la deuxième extrémité (762, 764, 766, 768) de l'enroulement primaire (112, 14, 116, 118) du module de conversion associé.

7. Système de conversion selon l'une quelconque des revendications 1 à 6, dans lequel
chaque module de conversion (12, 14, 16, 18) comprend associés de manière propre pour chacun des ses enroulements secondaires (122, 124, 125, 126, 127, 128), un redresseur monophasé différent (132, 134, 135, 136, 137, 138), une cellule de filtrage (142, 144, 145, 146, 147, 148) d'ondulations résiduelles différente, une paire distincte (152, 154, 155, 156, 157, 158) de bornes de sortie d'extrémité modulaire, chaque enroulement secondaire, le redresseur et la cellule de filtrage qui lui sont associés étant configurés pour convertir l'énergie électrique fournie en sortie du convertisseur primaire monophasé (10) en de l'énergie électrique délivrée sur la paire de bornes de sortie d'extrémité modulaire correspondante, sous une tension différentielle de sortie modulaire prédéterminé pour un courant de charge de sortie modulaire prédéterminé.

8. Système de conversion selon l'une quelconque des revendications 1 à 7, dans lequel chaque interrupteur est compris dans l'ensemble formé par les transistors bipolaires, les transistors de technologie. MOS, les transistors de type IGBT, et les thyristors de type GTO.

9. Système de conversion selon l'une quelconque des revendications 1 à 8, dans lequel au moins un module de conversion comprend un régulateur de sortie d'une de ses tensions différentielles de sortie, le régulateur étant compris dans l'ensemble formé par les régulateurs de type ballast, les régulateurs magnétiques et les régulateurs à découpage.

10. Système de conversion selon l'une quelconque des revendications 1 à 9, dans lequel
le convertisseur primaire monophasé (10 ;510) a une structure de pont asymétrique commandée en rapport cyclique régulée et comprend un générateur de signal de commande (90) destiné fournir un signal de commande aux interrupteurs,
le générateur de signal de commande (90) comporte une borne de sortie de commande pour délivrer un signal de commande de sortie, et une borne de réception d'une tension image représentative, soit de la différence entre la première tension d'alimentation et la deuxième tension d'alimentation, soit une tension différentielle fournie entre une première borne de sortie et une deuxième borne de sortie d'un module de conversion destiné à fournir l'énergie électrique de sortie la plus grande parmi les énergies électriques de sortie de tous les modules de conversion,
le signal de commande fourni par le générateur en sa borne de sortie de commande est un signal séquentiel à impulsions modulées en largeur, la modulation de la largeur dépendant la tension image reçue à la borne de réception.

## Patentansprüche

1. Modulares Gleich/Gleich-Strom/Spannung-Umwandlungssystem mit mehreren Modulen, das dazu bestimmt ist, elektrische Energie, die von einer Elektroenergieversorgungsquelle (4) bereitgestellt wird, die eine erste Differenzeingangsgleichspannung und einen ersten Eingangsgleichstrom ausgibt, in elektrische Energie umzuwandeln, die am Ausgang mindestens zweier unterschiedlicher Gleichrichterumwandlungsmodule ausgegeben wird,
wobei das Umwandlungssystem umfasst:
einen ersten Versorgungsanschluss (6) und einen zweiten Versorgungsanschluss (8), die dazu ausgelegt sind, an die Versorgungsquelle (4) angeschlossen zu werden und jeweils eine erste Versorgungsgleichspannung Vc1 bzw. eine zweite Versorgungsgleichspannung Vc2 zu erhalten, wobei die erste Versorgungsspannung Vc1 höher ist als die zweite Versorgungsspannung Vc2, und
einen einphasigen primären Wandler (10; 510) mit einer in festem oder geregeltem zyklischen Verhältnis angesteuerten asymmetrischen Brückenstruktur, und
eine Anzahl N, die größer oder gleich zwei ist, von Gleichrichterumwandlungsmodulen, die am Eingang des einphasigen primären Wandlers (10; 510) angeschlossen sind,
wobei der primäre Wandler (10; 510) eine erste Einheit (20; 520) aus mindestens einem Brückenzweig (22; 532, 534, 536, 538) und eine zweite Einheit (24; 522) aus mindestens einem Brückenzweig (32, 34, 36, 38; 524) aufweist, wobei jeder Brückenzweig (22, 32, 24, 36, 38; 524, 532, 534, 536, 538) zwischen dem ersten und dem zweiten Versorgungsanschluss (6, 8) angeschlossen ist,
wobei ein beliebiger Zweig (22; 532, 534, 536, 538) der ersten Einheit (20; 520) aus einem ersten anderen elektronischen Schalter (40; 552; 554, 556, 558), der durch ein erstes Steuermittel (42; 562, 564, 566, 568) angesteuert wird, und einer ersten Freilauf- und Entmagnetisierungsdiode (44; 572, 574, 576, 578) besteht, die mit dem ersten Schalter (40; 552; 554, 556, 558) an einem zugeordneten ersten Zwischenanschluss (46; 582, 584, 586, 588) und an dem zweiten Versorgungsanschluss (8) in Reihe geschaltet ist,
wobei ein beliebiger Zweig (32, 34, 36, 38; 524) der zweiten Einheit (24; 522) aus einem zweiten anderen elektronischen Schalter (52, 54, 56, 58; 590), der durch ein zweites Steuermittel (62, 64, 66, 68; 592) angesteuert wird, und einer zweiten Freilauf- und Entmagnetisierungsdiode (72, 74, 76, 78; 594) besteht, die mit dem zweiten Schalter (52, 54, 56, 58; 590) an einem zugeordneten zweiten Zwischenanschluss (82, 84, 86, 88; 596) und an dem ersten Versorgungsanschluss (6) in Reihe geschaltet ist,
**dadurch gekennzeichnet, dass**
mindestens eine Einheit von Zweigen (20; 522) aus der ersten Einheit und der zweiten Einheit (20, 24; 520, 522) von Zweigen eine Anzahl von Zweigen besitzt, die gleich der Anzahl N von Umwandlungsmodulen (12, 14, 16, 18) ist, wobei die andere Einheit (24; 520) eine Anzahl von Zweigen besitzt, die gleich Eins oder der Anzahl von Umwandlungsmodulen ist, und
das erste und zweite Steuermittel (42, 62, 64, 66, 68; 562, 564, 566, 568, 592) dazu ausgelegt sind, periodisch im leitenden Zustand und zur selben Zeit die Gesamtheit der Schalter (40, 52, 54, 56, 58; 552, 554, 556, 558, 590) anzusteuern, wobei die Spannung Ve1, die an jedem ersten Zwischenanschluss (46; 582, 584, 586, 588) abgegeben wird, höher ist als die Spannung Ve2, die an jedem zweiten Zwischenanschluss (82, 84, 86, 88; 596) abgegeben wird, wenn die ersten und zweiten Schalter (42, 53, 54, 56, 58, 552, 554, 556, 558, 590) in gleichzeitigem leitenden Zustand sind,
jedes Gleichrichterumwandlungsmodul (12, 14, 16, 18) am Eingang zwischen einem ersten Zwischenanschluss (46; 582, 584, 586, 588) und einem zweiten Zwischenanschluss (82, 84, 86, 88; 596) des einphasigen primären Wandlers (10; 510) angeschlossen ist, wobei die ersten Zwischenanschlüsse (582, 584, 586, 588), die einem beliebigen Paar von Modulen zugeordnet sind, unterschiedlich sind, wenn sich die Zweiganzahl der ersten Einheit von Zweigen (520) von Eins unterscheidet, wobei die zweiten Zwischenanschlüsse (82, 84, 86, 88), die einem beliebigen Paar von Modulen (12, 14, 16, 18) zugeordnet sind, unterschiedlich sind, wenn sich die Zweiganzahl der zweiten Einheit von Zweigen (24) von Eins unterscheidet, und
jedes Umwandlungsmodul (12, 14, 16, 18) einen anderen Transformator (102, 104, 106, 108) aufweist, der eine andere und einzige Primärwicklung (112, 114, 116, 118), wobei die Primärwicklung (112, 114, 116, 118) zwischen einem ersten Anschluss (46; 582, 584, 586, 588) und einem zweiten Zwischenanschluss (82, 84, 86, 88; 596) angeschlossen ist, die dem einphasigen primären Wandler (10; 510) zugeordnet sind, und mindestens eine Sekundärwicklung (122, 124, 125, 126, 127, 128) umfasst.

2. Umwandlungssystem nach Anspruch 1, wobei
die erste Einheit (20) von Zweigen einen einzigen Zweig (22) umfasst, der aus einem ersten elektronischen Schalter (40) und einer ersten Entmagnetisierungsdiode (44) besteht,
die zweite Einheit (24) von Brückenzweigen mehrere zweite Zweige (32, 34, 35, 36, 37, 38) umfasst, deren Anzahl gleich der Anzahl N von Umwandlungsmodulen ist, und
jeder zweite Zweig (32, 34, 36, 38) einem anderen Umwandlungsmodul (12, 14, 16, 18) zugeordnet ist, jeweils aus einem zweiten elektronischen Schalter (52, 54, 56, 58) bzw. einer zweiten Entmagnetisierungsdiode (72, 74, 76, 78) besteht, die an einem zweiten Zwischenpunkt (82, 84, 86, 88) miteinander in Reihe geschaltet sind, wobei der zweite Schalter (52, 54, 56, 58) an den zweiten Versorgungsanschluss (8) angeschlossen ist, und die zweite Entmagnetisierungsdiode (72, 74, 76, 78) an den ersten Versorgungsanschluss (6) angeschlossen ist, wobei der zweite Zwischenpunkt (82, 84, 86, 88) an die Primärwicklung (112, 114, 116, 118) des Transformators (102, 104, 106, 108) des zugeordneten Umwandlungsmoduls (12, 14, 16, 18) angeschlossen ist.

3. Umwandlungssystem nach Anspruch 2, wobei die zweiten Steuermittel (62, 64, 66, 68) einen einzigen Steuerverstärker (91) mit einem gemeinsamen Ausgang umfassen, der direkt auf jeden zweiten Schalter (52, 54, 56, 58) ohne aktives Zwischenelement aufgeschaltet ist.

4. Umwandlungssystem nach Anspruch 2, wobei die zweiten Steuermittel einen anderen Ausgangsverstärker umfassen, der am Eingang jedes zweiten Verstärkers angeschlossen ist.

5. Umwandlungssystem nach Anspruch 1, wobei
die zweite Einheit von Zweigen (522) einen einzigen zweiten Zweig (524) umfasst, der aus einem zweiten Schalter (590) und einer zweiten Entmagnetisierungsdiode (594) besteht,
die erste Einheit von Zweigen (520) mehrere erste Zweige (532, 534, 536, 538) umfasst, deren Anzahl gleich der Anzahl N von Umwandlungsmodulen ist, und
jeder erste Zweig (532, 534, 536, 538) einem anderen Umwandlungsmodul (12, 14, 16, 18) zugeordnet ist, aus einem ersten Schalter (552, 554, 556, 558) und einer ersten Entmagnetisierungsdiode (572, 574, 576, 578) besteht, die an einem ersten Zwischenpunkt (582, 584, 586, 588) miteinander in Reihe geschaltet sind, wobei der erste Schalter (552, 554, 556, 558) an den ersten Versorgungsanschluss (6) angeschlossen ist, und die erste Entmagnetisierungsdiode (572, 574, 576, 578) an den zweiten Versorgungsanschluss (596) angeschlossen ist, wobei der erste Zwischenpunkt (582, 584, 586, 588) an die Primärwicklung (112, 114, 116, 118) des Transformators des zugeordneten Umwandlungsmoduls angeschlossen ist,
und die ersten Steuermittel (562, 564, 566, 568) einen anderen Ausgangsverstärker (602, 604, 606) umfassen, der am Eingang jedes zugeordneten ersten Schalters (552, 554, 556, 558) angeschlossen ist.

6. Umwandlungssystem nach einem der Ansprüche 1 bis 5, mehrere Verbindungskabel (722, 724, 726, 728) umfassend, deren Anzahl gleich der Anzahl von Umwandlungsmodulen (12, 14, 16, 18) ist,
wobei jedes Kabel (722, 724, 726, 728) einem einzigen und anderen Umwandlungsmodul (12, 14, 16, 18) zugeordnet ist, und jedes Kabel eine verdrillte, zweiadrige, abgeschirmten Verbindung mit jeweils einer ersten Ader (732, 734, 736) und einer zweiten Ader (742, 744, 746, 748) ist, wobei die erste Ader (732, 734, 736, 738) den ersten Zwischenpunkt (46) und ein erstes Ende (752, 754, 756, 758) der Primärwicklung (112, 114, 116, 118) des zugeordneten Umwandlungsmoduls verbindet, wobei die zweite Ader (742, 744, 746, 748) den zweiten Zwischenpunkt (82, 84, 86, 88) und das zweite Ende (762, 764, 766, 768) der Primärwicklung (112, 114, 116, 118) des zugeordneten Umwandlungsmoduls verbindet.

7. Umwandlungssystem nach einem der Ansprüche 1 bis 6, wobei
jedes Umwandlungsmodul (12, 14, 16, 18) eigens für jede ihrer Sekundärwicklungen (122, 124, 125, 126, 127, 128) zugeordnet einen anderen einphasigen Gleichrichter (132, 134, 135, 136, 137, 138), eine andere Restwellenfilterzelle (142, 144, 145, 146, 147, 148), ein eigenständiges Paar (152, 154, 155, 156, 157, 158) von Modularende-Ausgangsanschlüssen umfasst, wobei jede Sekundärwicklung, der Gleichrichter und die Filterzelle, die ihm zugeordnet sind, dazu ausgelegt sind, die elektrische Energie, die am Ausgang des einphasigen primären Wandlers (10) bereitgestellt wird, in elektrische Energie, die an dem entsprechenden Paar von Modularende-Ausgangsanschlüssen ausgegeben wird, mit einer vorbestimmten modularen Differenzausgangsspannung für einen vorbestimmten modularen Ausgangsladestrom umzuwandeln.

8. Umwandlungssystem nach einem der Ansprüche 1 bis 7, wobei jeder Schalter in der Einheit inbegriffen ist, die aus Bipolartransistoren, Transistoren der MOS-Technologie, Transistoren des Typs IGBT und Thyristoren des Typs GTO besteht.

9. Umwandlungssystem nach einem der Ansprüche 1 bis 8, wobei mindestens ein Umwandlungsmodul einen Ausgangsregler für eine seiner Ausgangsdifferenzspannungen umfasst, wobei der Regler in der Gruppe inbegriffen ist, die aus Reglern des Typs Vorschaltgerät, Magnetreglern und Schaltreglern besteht.

10. Umwandlungssystem nach einem der Ansprüche 1 bis 9, wobei
der einphasige primäre Wandler (10; 510) eine asymmetrische Brückenstruktur hat, die in geregeltem zyklischen Verhältnis angesteuert wird, und einen Steuerbefehlgenerator (90) umfasst, der dazu bestimmt ist, den Schaltern einen Steuerbefehl bereitzustellen,
wobei der Steuerbefehlgenerator (90) einen Steuerausgangsanschluss zur Ausgabe eines Ausgangssteuersignals und einen Empfangsanschluss für eine Abbildungsspannung umfasst, die repräsentativ entweder für die Differenz zwischen der ersten Versorgungsspannung und der zweiten Versorgungsspannung oder eine Differenzspannung ist, die zwischen einem ersten Ausgangsanschluss und einem zweiten Ausgangsanschluss eines Umwandlungsmoduls bereitgestellt wird, das dazu bestimmt ist, die größte elektrische Ausgangsenergie unter den elektrischen Ausgangsenergien aller Umwandlungsmodule bereitzustellen,
wobei das durch den Generator an seinem Steuerausgangsanschluss bereitgestellte Steuersignal ein pulsbreitenmoduliertes sequentielles Signal ist, wobei die Modulation der Breite von der am Empfangsanschluss eingegangenen Abbildungsspannung abhängt.

## Claims

1. Modular DC-to-DC electrical power conversion system with several modules, intended to convert electrical power supplied by an electrical power supply (4) delivering a first differential DC input voltage and a first DC input current, into electrical power delivered at the output of at least two different rectifying conversion modules,
the conversion system comprising
a first supply terminal (6) and a second supply terminal (8), configured so as to be connected to the power supply (4) and to receive respectively a first supply voltage Vc1 and a second supply voltage Vc2, both DC, the first supply voltage Vc1 being higher than the second supply voltage Vc2, and
a single-phase primary inverter (10; 510), having an asymmetric bridge structure controlled by a fixed or regulated duty cycle, and
a number N, greater than or equal to two, of rectifying conversion modules, connected as an input from the single-phase primary inverter (10; 510),
the primary inverter (10; 510) comprising a first assembly (20; 520) of at least one bridge arm (22; 532, 534, 536, 538) and a second assembly (24; 522) of at least one bridge arm (32, 34, 36, 38; 524), each bridge arm (22, 32, 34, 36, 38; 524, 532, 534, 536, 538) being connected between the first and second power supply terminals (6, 8),
any of the arms (22; 532, 534, 536, 538) of the first assembly (20; 520) being formed of a first, different electronic switch (40; 552, 554, 556, 558) controlled by a first control means (42; 562, 564, 566, 568), and of a first free-wheel and demagnetisation diode (44; 572, 574, 576, 578), connected in series to the first switch (40; 552, 554, 556, 558) as a first associated intermediate terminal (46; 582, 584, 586, 588) and to the second power supply terminal (8),
any of the arms (32, 34, 36, 38; 524) of the second assembly (24; 522) being formed of a second different electronic switch (52, 54, 56, 58; 590) controlled by a second control means (62, 64, 66, 68; 592), and of a second free-wheel and demagnetisation diode (72, 74, 76, 78; 594), connected in series to the second switch (52, 54, 56, 58; 590) as a second associated intermediate terminal (82, 84, 86, 88; 596) and to the first power supply terminal (6),
**characterised in that**:
at least one assembly of arms (20; 522) out of the first assembly and the second assembly (20, 24; 520, 522) of arms has a number of arms equal to the number N of conversion modules (12, 14, 16, 18), the other assembly (24; 520) having a number of arms equal to one or to the number of conversion modules, and
the first and second control means (42, 62, 64, 66, 68; 562, 564, 566, 568, 592) are configured so as to periodically control conduction of all the switches (40, 52, 54, 56, 58; 552, 554, 556, 558, 590) at the same time, the voltage Ve1 delivered to each first intermediate terminal (46; 582, 584, 586, 588) being greater than the voltage Ve2 delivered to each second intermediate terminal (82, 84, 86, 88; 596) when the first and second switches (42, 53, 54, 56, 58, 552, 554, 556, 558, 590) are simultaneously conducting,
each rectifying conversion module (12, 14, 16, 18) is connected at the input between a first intermediate terminal (46; 582, 584, 586, 588) and a second intermediate terminal (82, 84, 86, 88; 596) of the single-phase primary inverter (10; 510), the first intermediate terminals (582, 584, 586, 588) associated with any pair of modules being different when the number of arms of the first assembly of arms (520) is different from one, the second intermediate terminals (82, 84, 86, 88) associated with any pair of modules (12, 14, 16, 18) being different when the number of arms of the second assembly of arms (24) is different from one, and
each conversion module (12, 14, 16, 18) comprises a different transformer (102, 104, 106, 108) having a single, different primary winding (112, 114, 116, 118), the primary winding (112, 114, 116, 118) being connected between a first terminal (46; 582, 584, 586, 588) and a second, intermediate terminal (82, 84, 86, 88; 596), associated with each other, of a single-phase primary inverter (10; 510), and having at least one secondary winding (122, 124, 125, 126, 127, 128).

2. Conversion system according to claim 1 wherein
the first assembly (20) of arms comprises a single arm (22) formed of a first electronic switch (40) and a first demagnetisation diode (44),
the second assembly (24) of bridge arms comprises several second arms (32, 34, 35, 36, 37, 38), whose number is equal to the number N of conversion modules, and
each second arm (32, 34, 36, 38) is associated with a different conversion module (12, 14, 16, 18), is formed respectively of a second electronic switch (52, 54, 56, 58) and a second demagnetisation diode (72, 74, 76, 78) connected together in series at a second intermediate point (82, 84, 86, 88), the second switch (52, 54, 56, 58) being connected to the second power supply terminal (8) and the second demagnetisation diode (72, 74, 76, 78) being connected to the first supply terminal (6), the second intermediate point (82, 84, 86, 88) being connected to the primary winding (112, 114, 116, 118) of the transformer (102, 104, 106, 108) of the associated conversion module (12, 14, 16, 18).

3. Conversion system according to claim 2 wherein the second control means (62, 64, 66, 68) comprise a single control amplifier (91) having a common output connected directly to each second switch (52, 54, 56, 58) without any intermediate active element.

4. Conversion system according to claim 2 wherein the second control means comprise a different output amplifier connected to the input of each second switch.

5. Conversion system according to claim 1 wherein
the second assembly of arms (522) comprises a single second arm (524) formed of a second switch (590) and a second demagnetisation diode (594),
the first assembly of arms (520) comprises several first arms (532, 534, 536, 538), whose number is equal to the number N of conversion modules, and
each first arm (532, 534, 536, 538) is associated with a different conversion module (12, 14, 16, 18), is formed of a first switch (552, 554, 556, 558) and a first demagnetisation diode (572, 574, 576, 578) connected together in series at a first intermediate point (582, 584, 586, 588), the first switch (552, 554, 556, 558) being connected to the first power supply terminal (6) and the first demagnetisation diode (572, 574, 576, 578) being connected to the second supply terminal (596), the first intermediate point (582, 584, 586, 588) being connected to the primary winding (112, 114, 116, 118) of the transformer of the associated conversion module,
and the first control means (562, 564, 566, 568) comprise a different output amplifier (602, 604, 606), connected to the input of each first associated switch (552, 554, 556, 558).

6. Conversion system according to any one of claims 1 to 5, comprising several connection cables (722, 724, 726, 728), whose number is equal to the number of conversion modules (12, 14, 16, 18),
each cable (722, 724, 726, 728) being associated with a single, different conversion module (12, 14, 16, 18), and each cable being a shielded twisted-pair connection having respectively a first wire (732, 734, 736) and a second wire (742, 744, 746, 748), the first wire (732, 734, 736, 738) connecting the first intermediate point (46) and a first end (752, 754, 756, 758) of the primary winding (112, 114, 116, 118) of the associated conversion module, the second wire (742, 744, 746, 748) connecting the second intermediate point (82, 84, 86, 88) and the second end (762, 764, 766, 768) of the primary winding (112, 14, 116, 118) of the associated conversion module.

7. Conversion system according to any one of claims 1 to 6, wherein
each conversion module (12, 14, 16, 18) comprises, associated specifically for each of its secondary windings (122, 124, 125, 126, 127, 128), a different single-phase rectifier (132, 134, 135, 136, 137, 138), a different filter capacitor (142, 144, 145, 146, 147, 148) for filtering out residual ripples, a distinct pair (152, 154, 155, 156, 157, 158) of modular end output terminals, each secondary winding, the rectifier and the filter capacitor associated therewith being configured so as to convert the electrical power supplied at the output of the single-phase primary inverter (10) into electrical power delivered to the corresponding pair of modular end output terminals, at a predetermined modular output differential voltage for a predetermined modular output charging current.

8. Conversion system according to any one of claims 1 to 7, wherein each switch is included in the assembly formed by the bipolar transistors, the MOS transistors, the IGBT transistors and the GTO thyristors.

9. Conversion system according to any one of claims 1 to 8, wherein at least one conversion module comprises an output regulator for one of its output differential voltages, the regulator being included in the assembly formed by the ballast-type regulators, the magnetic regulators and the switching regulators.

10. Conversion system according to any one of claims 1 to 9, wherein
the single-phase primary inverter (10; 510) has an asymmetric bridge structure controlled by a regulated duty cycle and comprises a control signal generator (90) intended to supply a control signal to the switches,
the control signal generator (90) comprises a control output terminal for delivering an output control signal, and a terminal for receiving an image voltage representative either of the difference between the first supply voltage and the second supply voltage, or a differential voltage supplied between a first output terminal and a second output terminal of a conversion module intended to supply the highest output electrical power of the output electrical powers coming from all the conversion modules,
the control signal supplied by the generator at its control output terminal is a sequential pulse-width modulated signal, the width modulation depending on the image voltage received at the receiving terminal.
